# EUROPEAN PATENT APPLICATION

(11) **EP 3 560 993 A1**
(43) Date of publication of application: **30.10.2019**
(21) Application number: 17884821.4
(22) Date of filing: 21.12.2017
(51) Int. Cl.: C08L 21/00, C08F 297/00, C08K 5/01, C08L 91/00, C08L 101/00, G09B 23/28

(54) **RESIN COMPOSITION**

(30) Priority: 21.12.2016 JP 2016247587
(71) Applicant: Denka Company Limited, Tokyo 103-8338 (JP)
(72) Inventor: HASEGAWA Masaru, Ichihara-shi Chiba 290-8588 (JP); MIYAMA Akira, Machida-shi Tokyo 194-8560 (JP); ARAI Toru, Tokyo 103-8338 (JP)
(74) Representative: Beckmann, Claus
(86) International application number: PCT/JP2017/045882
(87) International publication number: WO 2018/117212

(57) **Abstract**

[Problem] To provide a resin composition having excellent mechanical strength and good texture.

[Solution] A resin composition comprising 100 parts by mass of a component (A) elastomer, 5-90 parts by mass of a component (B) cross copolymer, and 1-1500 parts by mass of a component (C) oil, wherein the resin composition has, for a sheet of 1.0 mm thickness and at a load of 10 g, a maximum static friction force of 100 gf or more, and a coefficient of static friction of 10 or more and 30 or less. The component (A) elastomer is preferably one or more copolymers selected from a styrene-based block copolymer (A-1) and an ethylene-α-olefin copolymer (A-2).

## Description

### TECHNICAL FIELD

The present invention pertains to a resin composition having excellent mechanical strength and texture.

### BACKGROUND ART

Soft resins such as thermoplastic elastomers are widely used as a surface skin material for various kinds of members such as a grip material for sports equipment and automobile interior material. A surface skin material means, for example, a member that covers the surface of various kinds of hard members such as automobile equipment, sports equipment, home appliances, construction material, furniture, robots, etc. Conventionally, natural leathers and soft polyvinyl chloride (PVC) resins have been utilized in these uses where softness, texture, and tactile feel are important considerations. However, the former is costly and the latter has problems of plasticizer bleed-out and a movement away from PVC, resulting in more petrochemical-based thermoplastic elastomers being used instead. Examples of petrochemical-based thermoplastic elastomers include ethylene-based elastomers, propylene-based elastomers, and styrene-diene-based elastomers.

Conventionally used soft PVC has excellent scratch resistance and also has relatively good texture whereas thermoplastic elastomers used as substitutes therefor have excellent softness, mechanical strength, low temperature properties, and heat resistance, but the elasticity thereof, compared to soft PVC, is too strong, resembling that of rubber. Thus, these thermoplastic elastomers exhibit inferior texture and tactile feel in properties such as feeling of moisture, feel, and grip. On the one hand, although urethane-based cured resins (cross-linked resins) having high softness and good texture are commercially available, these resins have a problem in that the mechanical strength (tearing properties, etc.) thereof is relatively low. Further, urethane resins generally have problems of durability, in particular, hydrolysis resistance. Here, there is a demand for a thermoplastic elastomer that, while continuing to exhibit characteristics (cost and productivity) of a thermoplastic elastomer, also has excellent softness, mechanical strength, durability, tactile feel, and texture.

On the other hand, in the medical field, surgeons generally use surgical resection tools such as surgical scalpels and the like in operations, and if the depth of an incision made by a surgeon is too deep it can be fatal. Therefore, the work of a surgeon demands carefully practiced skills, and it would not be an exaggeration to say that the technical level of these skills is directly related to the success or failure of a surgical operation. Conventionally, since it is impossible to use a living body in practice for an operation on a human, tissue and skin of animals such as pigs are generally used. However, freshness is demanded in these cases. Further, there is a concern that if a person doing surgical practice is injured, the person may be infected from the wound with disease-causing bacteria, or the like. Hygiene management of the surgical resection tools and disposal of used internal tissue also require a great cost. Conducting surgical practice using konjac instead of tissue of a living body has also been considered, but since the feel of cutting and the texture of konjac are very different to the feel of cutting and the texture of a human body, this cannot be said to be suitable for surgical practice. Here, instead of a living body, using a tissue model made to resemble tissue of a living body can be considered. Models comprising a soft resin material such as, a silicone, a urethane elastomer, a styrene elastomer, etc., which are so-called dry materials, have been proposed as tissue models (see Patent Document 2). However, since the feel of cutting and the texture of these materials obtained by conventional techniques are very different to the feel of cutting and the texture of human tissue, these cannot be said to be suitable for surgical practice. Silicones and urethane elastomers are post-cured and have a problem of low productivity due to the time taken to be cured. Moreover, when producing a tissue model by casting in a mold comprising an inner mold and an outer mold, it is necessary to make an incision when removing the inner mold, but re-adhering is difficult in these post-cured resins which is a problem when re-adhering this incision. If a specific adhesive agent is used, adhesion is possible but since adhesive agents are hard compared to the tissue model material, there is a problem in that the tactile feel after adhesion is different.

As a tissue model, using a model of living body soft tissue has also been proposed, said tissue being obtained by injecting, into a mold for casting a living body soft tissue, a solution in which a polyvinyl alcohol has been dissolved, then forming into a gel by cooling, and removing the obtained aqueous gel composition from the mold (see, for example, Patent Document 3). These are known as so-called wet materials and include a significant amount of water. However, since polyvinyl alcohol-based materials need to maintain a constant water content, management of moisture levels and management of water content are required during storage, and countermeasures such as refrigerated storage are needed to prevent the occurrence of decomposition, mold, etc. Thus, long-term storage is difficult and, in many cases, usage term becomes limited to several weeks. Accordingly, in recent years, it is desirable to develop a material for a tissue model which has a softness, stretch, texture, etc. closely resembling internal tissue of a human, exhibits excellent mechanical strength and durability, can suitably be used in surgical practice for internal tissue of a human, and in which a so-called dry material that does not include water is used. In particular, a material for skin and blood vessels for medical simulators is demanded. In particular, it is preferable that the texture and the feeling of incision by a scalpel, in the case of skin, and the texture and the feeling when punctured with a needle, in the case of a blood vessel, are close to those of skin and blood vessels of an actual human body.

Patent Documents 1 and 2 disclose a technique pertaining to: a cross copolymer which is a branched copolymer having a soft segment comprising an ethylene-styrene-divinylbenzene copolymer and a hard segment comprising a polystyrene; a method for producing the same; and a use of the same. These documents do not have any disclosures pertaining to improving feel and grip properties of a thermoplastic elastomer by using a cross copolymer.

Patent Document 3 discloses a living body simulation material which is configured by using a high molecular weight blend material having, as main components, a high molecular weight organic material and a low molecular weight material and in which the content ratio of the high molecular weight organic material is less than the content ratio of the low molecular weight organic material. Patent Document 4 discloses a living body simulation material comprising a thermoplastic material that includes a high molecular weight organic material and a softener. Patent Documents 3 and 4 do not have any disclosures pertaining to a cross copolymer.

### PRIOR ART DOCUMENTS

### PATENT DOCUMENTS

Patent Document 1: WO 2000/037517 A
Patent Document 2: WO 2007/139116 A
Patent Document 3: JP H07-175407 A
Patent Document 4: JP H9-208836 A

### SUMMARY OF INVENTION

### TECHNICAL PROBLEM

The objective of the present invention is to provide a resin composition having excellent mechanical strength and good texture.

### SOLUTION TO PROBLEM

The present invention is as described below.
1. A resin composition comprising 100 parts by mass of a component (A) elastomer, 5-90 parts by mass of a component (B) cross copolymer, and 1-1500 parts by mass of a component (C) oil, said resin composition having, for a sheet of 1.0 mm thickness and at a load of 10 g, a maximum static friction force of 100 gf or more, and a coefficient of static friction of 10 or more and 30 or less.
2. The resin composition described in 1, wherein the maximum static friction force is 120 gf or more and 300 gf or less and the coefficient of static friction is 12 or more and 30 or less.
3. The resin composition described in 1 or 2, wherein the component (A) elastomer contains one or more copolymers selected from a styrene-based block copolymer (A-1) and an ethylene-α-olefin copolymer (A-2).
4. The resin composition described in any one of 1 to 3, wherein the component (A) elastomer contains the styrene-based block copolymer (A-1).
5. The resin composition described in any one of 1 to 4 having a tensile elasticity in the range of 0.01-10 MPa.
6. The resin composition described in any one of 1 to 5 having a thread tearing strength of 2.5 N or more.
7. The resin composition described in any one of 1 to 6 having a type A hardness of 80 or less.
8. The resin composition described in any one of 1 to 7, wherein the component (B) cross copolymer is obtained by a production method comprising a coordination polymerization step followed by an anion polymerization step, wherein, as the coordination polymerization step, an ethylene-aromatic vinyl compound-aromatic polyene copolymer is synthesized by carrying out copolymerization of an ethylene monomer, an aromatic vinyl compound monomer, and an aromatic polyene using a single site coordination polymerization catalyst, and next, as the anion polymerization step, polymerization using an anion polymerization initiator in the coexistence of the ethylene-aromatic vinyl compound-aromatic polyene copolymer and an aromatic vinyl compound monomer is performed to obtain the component (B) copolymer, and furthermore, the component (B) cross copolymer satisfies all of the conditions (1)-(3) below:
   (1) the content of aromatic vinyl compound unit in the ethylene-aromatic vinyl compound-aromatic polyene copolymer obtained in the coordination polymerization step is 10 mol% or more and 40 mol% or less, the aromatic polyene unit content is 0.01 mol% or more and 0.2 mol% or less, and the remainder is an ethylene unit content;
   (2) the weight-average molecular weight of the ethylene-aromatic vinyl compound-aromatic polyene copolymer obtained in the coordination polymerization step is 50,000 or more and 300,000 or less, and the molecular weight distribution (Mw/Mn) of the same is 1.8 or more and 6 or less; and
   (3) the content of the ethylene-aromatic vinyl compound-aromatic polyene copolymer included in the cross copolymer is 40 mass% or more and 90 mass% or less.
9. The resin composition described in any one of 1 to 7, wherein the component (B) cross copolymer is a copolymer that has an ethylene-aromatic vinyl compound-aromatic polyene copolymer chain and an aromatic vinyl compound polymer chain, and has a structure wherein the ethylene-aromatic vinyl compound-aromatic polyene copolymer chain and the aromatic vinyl compound polymer chain are bonded via an aromatic polyene unit.
10. The resin composition described in any one of 1 to 7, wherein the component (B) cross copolymer is a graft-through copolymer comprising an ethylene-aromatic vinyl compound-aromatic polyene copolymer chain and an aromatic vinyl compound polymer chain.
11. The resin composition described in any one of 1 to 7, wherein the component (B) cross copolymer satisfies all of the conditions (4)-(7) below:
   (4) peaks ascribed to an ethylene-aromatic vinyl compound copolymer and an aromatic vinyl compound polymer are observed by ¹H-NMR measurement, and the aromatic vinyl compound content in the ethylene-aromatic vinyl compound copolymer is 10-40 mol%, and the content of the ethylene-aromatic vinyl compound copolymer component included is in the range of 40-90 mass%;
   (5) the included ethylene-aromatic vinyl compound copolymer and aromatic vinyl compound polymer have a bond;
   (6) an MFR (200°C, load 49 N) is in the range of 0.05-50 g/10 min.; and
   (7) an included gel content is 0.2 mass% or less.
12. The resin composition described in any one of 1 to 11 for use in a surface skin material.
13. The resin composition described in any one of 1 to 11 for use in skin or a blood vessel for a medical simulator.
14. A surface skin material made using the resin composition described in any one of 1 to 11.
15. Skin or a blood vessel for a medical simulator made using the resin composition described in any one of 1 to 11 and 13.

### ADVANTAGEOUS EFFECTS OF INVENTION

According to the present invention, it is possible to provide a resin composition that can be formed as a sheet having excellent mechanical strength and good texture.

### DESCRIPTION OF EMBODIMENTS

The present invention is described in detail below. Below, content may also be referred to as amount contained.

The resin composition according to the present embodiment contains a component (A) elastomer, a component (B) cross copolymer, and a component (C) oil.

### Component (A) elastomer

The component (A) elastomer is preferably a resin selected from a styrene-based block copolymer and an ethylene-α-olefin copolymer. There may be one or a plurality of these resins. Below, these components are referred to as a styrene-based block copolymer (A-1) and an ethylene-α-olefin copolymer (A-2).

### Component (A-1) styrene-based block copolymer

The styrene-based block copolymer is an aromatic vinyl/conjugated diene block copolymer, or a hydrogenate thereof, comprising a block polymer unit (X) derived from an aromatic vinyl and a block polymer unit (Y) derived from a conjugated diene.

Forms of an aromatic vinyl/conjugated diene block copolymer having such a configuration are represented by, for example, X(YX)n or (XY)n [wherein n is an integer of 1 or more]. Among these, the form X(YX)n, and in particular, the form X-Y-X, is preferred. X represents an aromatic vinyl block unit and Y represents a conjugated diene rubber block unit. As an aromatic vinyl/conjugated diene block copolymer having an X-Y-X form, one or more kinds comprising a polystyrene-polybutadiene-polystyrene block copolymer, a polystyrene-polyisoprene-polystyrene block copolymer, and a polystyrene-polyisoprene/butadiene-polystyrene block copolymer are preferred.

In such aromatic vinyl/conjugated diene block copolymers, an aromatic vinyl block unit (X), which is a hard segment, exists as a crossing point for a conjugated diene rubber block unit (Y) and thereby forms a pseudo cross-link (domain). The conjugated diene rubber block unit (Y) which exists between the aromatic vinyl block units (X) is a soft segment and has rubber elasticity.

Examples of an aromatic vinyl which forms the block polymer unit (X) include styrene, α-methylstyrene, 3-methylstyrene, p-methylstyrene, 4-propylstyrene, 4-dodecylstyrene, 4-cyclohexylstyrene, 2-ethyl-4-benzylstyrene, 4-(phenylbutyl)styrene, 1-vinylnaphthalene, and 2-vinylnaphthalene. Among these, styrene is preferred.

Examples of a conjugated diene which forms the block polymer unit (Y) include butadiene, isoprene, pentadiene, 2,3-dimethylbutadiene, and combinations thereof. Among these, one or more conjugated dienes comprising butadiene, isoprene, or a combination of butadiene and isoprene (butadiene/isoprene copolymer) is preferred. The conjugated diene block polymer unit (Y) comprising a butadiene/isoprene copolymer unit may be any of a random copolymer unit, a block copolymer unit, and a tapered copolymer (graded composition copolymer) unit with butadiene and isoprene.

The aromatic vinyl/conjugated diene block copolymer such as those described above preferably has an aromatic vinyl block polymer unit (X) content of 5 mass% or more and 50 mass% or less, and more preferably 20 mass% or more and 35 mass% or less. The content of the aromatic vinyl unit can be measured using a normal method such as infrared spectroscopy and NMR spectroscopy. The melt flow rate (MFR) (in compliance with JIS K 7210; under a temperature of 230°C and a load of 2.16 kg) of component (A) is preferably 1 g/10 min. or less, and more preferably less than 0.1 g/10 min. By setting MFR in the abovementioned range, bleed-out when oil is added can be suppressed and it is also possible to maintain high mechanical strength.

Various methods can be used as a production method for such an aromatic vinyl/conjugated diene block copolymer described above. Examples of the production method include: (1) a method in which an aromatic vinyl compound and then a conjugated diene are sequentially polymerized using an alkyl lithium compound such as n-butyl lithium as an initiator; (2) a method in which an aromatic vinyl compound and then a conjugated diene are polymerized and these are coupled using a coupling agent; and (3) a method in which a conjugated diene and then an aromatic vinyl compound are sequentially polymerized using a lithium compound as an initiator.

A hydrogenated block copolymer is an example of a hydrogenate. The hydrogenated block copolymer is a substance wherein an aromatic vinyl/conjugated diene block copolymer such as those described above has been hydrogenated using a publicly-known method, and although the degree of hydrogenation thereof is arbitrary, the hydrogenation rate is preferably 90 mol% or more. This hydrogenation rate is a value when the entire amount of carbon-carbon double bonds in the conjugated diene block copolymer (Y) is defined as 100 mol% and can be determined using a publicly-known method. Examples of such a hydrogenated block copolymer (A) include a polystyrene-poly(ethylene/propylene) block (SEP), a polystyrene-poly(ethylene/propylene) block-polystyrene (SEPS), a polystyrene-poly(ethylene/butylene) block-polystyrene (SEBS), and a polystyrene-poly(ethylene-ethylene/propylene) block-polystyrene (SEEPS). More specifically, examples include HYBRAR (manufactured by Kuraray Co. Ltd.), SEPTON (manufactured by Kuraray Co. Ltd.), Kraton (manufactured by Shell Chemicals), Kraton G (manufactured by Shell Chemicals), and Tuftec (manufactured by Asahi Kasei Corp.) (all of the above are product names).

### Component (A-2) ethylene-α-olefin copolymer

A publicly-known ethylene-α-olefin copolymer can be used as the ethylene-α-olefin copolymer, but a copolymer of ethylene and an α-olefin having a carbon number of 3-10 is preferred. Further, a small amount of a polyene may also be copolymerized. From a perspective of softness and mechanical properties, the ethylene-α-olefin copolymer preferably has a density of 0.850-0.900 g/cm³. From a perspective of compatibility (bleed-out resistance) with, for example, an oil used for softening, the ethylene-*α*-olefin copolymer preferably has an MFR, measured in compliance with JIS K 7210 under a temperature of 190°C and a load of 2.16 kg, of 0.01-20 and more preferably 0.01-5. From a perspective of softness, mechanical properties, and cold resistance (shock resistance at low temperatures), the α-olefin is preferably 1-octene. These ethylene-α-olefin copolymers can be produced by a publicly-known method using a metallocene-based catalyst.

### Component (B) cross copolymer

The component (B) cross copolymer (hereinafter also referred to as the cross copolymer) is a cross copolymer obtained by a production method comprising a coordination polymerization step followed by an anion polymerization step or a radical polymerization step. The cross copolymer of the present embodiment and a resin composition having this cross copolymer as a main component exhibit excellent mechanical properties, feel, and scratch and abrasion resistance properties.

The amount of the component (B) cross copolymer used with respect to 100 parts by mass of the component (A) elastomer is in the range of 5-90 parts by mass, and preferably in the range of 10-80 parts by mass.

Specifically, the cross copolymer is a copolymer described below. The copolymer is obtained by firstly, in the coordination polymerization step, producing an olefin-aromatic vinyl compound-aromatic polyene copolymer from an olefin, an aromatic vinyl compound, and an aromatic polyene monomer using a single site coordination polymerization catalyst, and then carrying out anion polymerization or radical polymerization in the coexistence of this olefin-aromatic vinyl compound-aromatic polyene copolymer and an aromatic vinyl compound monomer. This cross copolymer has an olefin-aromatic vinyl compound-aromatic polyene copolymer chain (which may also be described as a main chain) and an aromatic vinyl compound polymer chain (which may also be described as a side chain). Cross copolymers and production methods therefor are disclosed in WO 2000/037517 A, US 6559234 B, and WO 2007/139116 A. By using the component (B) cross copolymer, it is possible to make the tactile feel of a model of tissue or the like approach that of a human body tissue, etc.

Here, examples of an aromatic vinyl compound include styrene and monomers of styrene having various kinds of substitutions, such as p-methylstyrene, m-methylstyrene, o-methylstyrene, o-t-butylstyrene, m-t-butylstyrene, p-t-butylstyrene, p-chlorostyrene, and o-chlorostyrene Among these, from an industrial perspective, one or more comprising styrene, p-methylstyrene, and p-chlorostyrene is preferable, and styrene is most preferable. One kind may be used or two or more kinds may be used in combination.

Here, examples of an olefin include monomers such as ethylene and α-olefins having a carbon number of 3-20. Examples of an α-olefin having a carbon number of 3-20 include propylene, 1-butene, 1-hexene, 4-methyl-1-pentene, and 1-octene. In the present embodiment, the olefin category also includes cyclic olefins. Examples of a cyclic olefin include vinylcyclohexane, cyclopentene, and norbonene. Among these, one or more from ethylene, propylene, 1-butene, 1-hexene, and 1-octene is preferable and ethylene is more preferable. Among these, one kind may be used or two or more kinds may be used in combination.

Here, an aromatic polyene means an aromatic polyene that has a carbon number of 10 or more and 30 or less, has a plurality of double bonds (vinyl group) and one or a plurality of aromatic groups, and is a monomer that can be coordination polymerized, wherein in a polymerized state in which one of the double bonds (vinyl group) is used in coordination polymerization, the remaining double bonds can be anion polymerized. Among these, a divinylbenzene is preferable. As the divinylbenzene, one or more of ortho-divinylbenzene, para-divinylbenzene, and meta-divinylbenzene is preferable. Among these, one kind may be used or two or more kinds may be used in combination.

The cross copolymer is preferably a copolymer obtained by performing anion polymerization in the coexistence of an ethylene-styrene-divinylbenzene copolymer obtained by coordination polymerization and a styrene monomer. The cross copolymer in this case has an ethylene-styrene-divinylbenzene copolymer chain (which may also be described as a main chain and is a soft component) and a polystyrene chain (which may also be described as a side chain and is a hard component). In particular, the softness of the present cross copolymer is determined by various parameters such as: the styrene content of the ethylene-styrene-divinylbenzene copolymer chain, which is the soft polymer chain component (soft segment); the ratio of the soft component and hard component included; the content of the divinylbenzene component that binds the soft component chain and the hard component chain; and the molecular flowability (MFR value) of the entire cross copolymer which is defined by the molecular weights of the ethylene-styrene-divinylbenzene copolymer chain and the polystyrene chain and the divinylbenzene content. The storage elastic modulus of the resin composition decreases as the styrene content of the ethylene-styrene-divinylbenzene copolymer chain becomes higher and the crystallinity of the ethylene chain decreases, or as the content of the ethylene-styrene-divinylbenzene copolymer chain, which is the soft component, increases.

The cross copolymer preferably satisfies all conditions (1) to (3) below.
(1) The content of the aromatic vinyl compound unit in the ethylene-aromatic vinyl compound-aromatic polyene copolymer is 10 mol% or more and 40 mol% or less, the aromatic polyene unit content is 0.01 mol% or more and 0.2 mol% or less, and the remainder is the ethylene unit content. The content of the aromatic vinyl compound unit is preferably 10 mol% or more. The content of the aromatic vinyl compound unit is preferably less than 40 mol%, and more preferably 30 mol% or less. The aromatic polyene content in the ethylene-aromatic vinyl compound-aromatic polyene copolymer (ethylene-styrene-divinylbenzene copolymer) is preferably 0.01 mol% or more and 0.2 mol% or less, and more preferably 0.2 mol% or more and 0.1 mol% or less. Being within the above ranges makes it possible to prevent expression of physical properties as those of a simple mixture of an ethylene-aromatic vinyl compound copolymer and an aromatic vinyl compound copolymer wherein the physical properties of the cross copolymer are not expressed. Further, it is possible to prevent a gel content from being included at more than a specific amount, and furthermore, it is possible to prevent a decrease in moldability (for example, if the MFR (200°C, 49 N) of the cross polymer also becomes less than 0.05 g/10 min.).
(2) The weight average molecular weight of the ethylene-aromatic vinyl compound-aromatic polyene copolymer is 50,000 or more and 300,000 or less, and the molecular weight distribution (Mw/Mn) is 1.8 or more and 6 or less. The molecular weight distribution is preferably 1.8 or more and 3 or less.
(3) The content of the ethylene-aromatic vinyl compound-aromatic polyene copolymer included in the cross copolymer is 40 mass% or more and 90 mass% or less. The content of the ethylene-aromatic vinyl compound-aromatic polyene copolymer is preferably 60 mass% or more and 90 mass% or less.

The cross copolymer has an ethylene-aromatic vinyl compound-aromatic polyene copolymer chain and an aromatic vinyl compound polymer chain, and preferably has a structure wherein the ethylene-aromatic vinyl compound-aromatic polyene copolymer chain and the aromatic vinyl compound polymer chain are bonded via an aromatic polyene unit. That the ethylene-aromatic vinyl compound-aromatic polyene copolymer chain and the aromatic vinyl compound polymer chain are bonded via an aromatic polyene unit can be proven by the observable phenomenon below. Here, a representative example is shown in which an ethylene-styrene-divinylbenzene copolymer chain and a polystyrene chain are bonded via a divinylbenzene unit. That is, the ¹H-NMR (proton NMR) of an ethylene-styrene-divinylbenzene copolymer obtained in the coordination polymerization step, and of a cross copolymer obtained by carrying out anion polymerization in the presence of the ethylene-styrene-divinylbenzene copolymer and a styrene monomer are measured, and a peak intensity of the vinyl group hydrogen (proton) of the divinylbenzene units of both are compared using an appropriate internal reference peak (appropriate peak derived from the ethylene-styrene-divinylbenzene copolymer). Here, the peak intensity (surface area) of the vinyl group hydrogen (proton) of the divinylbenzene unit of the cross copolymer is less than 50% compared to the same peak intensity (surface area) of the divinylbenzene unit of the ethylene-styrene-divinylbenzene copolymer, and preferably less than 20%. During anion polymerization (cross-polymerization step) the divinylbenzene unit is also copolymerized simultaneously with polymerization of the styrene monomer, and since the ethylene-styrene-divinylbenzene copolymer chain and the polystyrene chain are bonded via a divinylbenzene unit, the peak intensity of the hydrogen (proton) of the divinylbenzene unit greatly decreases in the cross copolymer after anion polymerization. In fact, the peak of the hydrogen (proton) of the vinyl group of the divinylbenzene unit is substantially eliminated in the cross copolymer after anion polymerization. The details are disclosed in the publicly-known document "Branching Copolymer Synthesis from Divinylbenzene-containing Olefinic Terpolymer", ARAI, Tooru, HASEGAWA Masaru, Journal of the Society of Rubber Science and Technology, Japan, p. 382, vol. 82 (2009).

From a different perspective, that the ethylene-aromatic vinyl compound-aromatic polyene copolymer chain and the aromatic vinyl compound polymer chain are bonded via an aromatic polyene unit in the present cross copolymer (as an example, an ethylene-styrene-divinylbenzene copolymer chain and a polystyrene chain are bonded via a divinylbenzene unit) can be proven by the observable phenomenon below. That is, even after a Soxhlet extraction has been performed on the present cross copolymer a sufficient number of times using an appropriate solvent, the included ethylene-styrene-divinylbenzene copolymer chain and the polystyrene chain cannot be separated. Normally, by performing a Soxhlet extraction using boiling acetone, an ethylene-styrene-divinylbenzene copolymer (or an ethylene-styrene copolymer) having an identical composition to the ethylene-styrene-divinylbenzene copolymer chain included in the present cross copolymer and polystyrene can be separated into an ethylene-styrene-divinylbenzene copolymer (or an ethylene-styrene copolymer) as an acetone insoluble component and a polystyrene as an acetone soluble component. However, when an identical Soxhlet extraction is performed on the present cross copolymer, a relatively small amount of a polystyrene homopolymer included in the cross copolymer is obtained as an acetone soluble component, but performing an NMR measurement on the acetone insoluble component, which accounts for a majority amount of the cross copolymer, indicates that an ethylene-styrene-divinylbenzene copolymer chain and a polystyrene chain are both included, and thus it is understood that these cannot be separated by a Soxhlet extraction. Details of this are also disclosed in the publicly-known document "Branching Copolymer Synthesis from Divinylbenzene-containing Olefinic Terpolymer", ARAI, Tooru, HASEGAWA Masaru, Journal of the Society of Rubber Science and Technology, Japan, p. 382, vol. 82 (2009).

From the above, the component (B) cross copolymer has an ethylene-aromatic vinyl compound-aromatic polyene copolymer chain and an aromatic vinyl compound polymer chain, and has a structure wherein the ethylene-aromatic vinyl compound-aromatic polyene copolymer chain and the aromatic vinyl compound polymer chain are bonded via an aromatic polyene unit. The present cross copolymer may have included therein a relatively small amount of an aromatic vinyl compound (polystyrene) homopolymer.

The present cross copolymer shall be described from a further different perspective. The present cross copolymer can also be obtained by a production method including a polymerization step comprising a coordination polymerization step and a cross-polymerization step, wherein as the coordination polymerization step, an ethylene-aromatic vinyl compound-aromatic polyene copolymer is synthesized by performing copolymerization of an ethylene monomer, an aromatic vinyl compound monomer and an aromatic polyene using a single site coordination polymerization catalyst, and next as the cross-polymerization step, the cross copolymer is produced by anion polymerization, using an anion polymerization initiator, in the coexistence of the ethylene-aromatic vinyl compound-aromatic polyene copolymer and an aromatic vinyl compound monomer. With regard to the aromatic vinyl compound monomer, even if an unreacted monomer remaining in polymerization liquid in the coordination polymerization step is used, an aromatic vinyl compound monomer may be newly added thereto. By adding the anion polymerization initiator to the polymerization liquid, anion polymerization starts but in this case, anion polymerization starts substantially from the aromatic vinyl compound monomer which, compared to the aromatic polyene unit of the ethylene-aromatic vinyl compound-aromatic polyene copolymer, is included in the polymerization liquid in an overwhelmingly large amount, and while the aromatic vinyl compound monomer is polymerized, the vinyl group of the aromatic polyene unit of the ethylene-aromatic vinyl compound-aromatic polyene copolymer also copolymerizes and polymerization progresses. Due thereto, from publicly-known documents and the knowledge of those skilled in the art, the obtained cross copolymer is thought to include many structures (cross-links) wherein the ethylene-aromatic vinyl compound-aromatic polyene copolymer, which is the main chain, and the aromatic vinyl compound polymer chain, which is the cross chain, are bonded in a grafting-through form.

From the above, as an expression for defining the cross copolymer, the component (B) cross copolymer is a graft-through copolymer comprising an ethylene-aromatic vinyl compound-aromatic polyene copolymer chain and an aromatic vinyl compound polymer chain, and the ethylene-aromatic vinyl compound-aromatic polyene copolymer chain and the aromatic vinyl compound polymer chain may be bonded via an aromatic polyene unit.

It should be noted that when carrying out ¹H-NMR measurement on the cross copolymer, the amount of the aromatic polyene (divinylbenzene) unit included is remarkably small compared to the amount of the aromatic vinyl compound (styrene) unit, and the peak position of the former overlaps with the aromatic vinyl compound (styrene) unit and therefore the peak cannot be directly confirmed. Due thereto, by ¹H-NMR measurement of the present cross copolymer, a peak derived from the ethylene-aromatic vinyl compound copolymer (ethylene-styrene copolymer) and a peak derived from the aromatic vinyl compound polymer (polystyrene) can be observed and from these, it is possible to determine: the ethylene unit content derived from the ethylene-aromatic vinyl compound copolymer (ethylene-styrene copolymer) in the cross copolymer; the aromatic vinyl compound (styrene) unit content in the same; and the content of the aromatic vinyl compound polymer (polystyrene) in the same. It should be noted that, here, with the exception of the content of the aromatic polyene (divinylbenzene) in the ethylene-aromatic vinyl compound-aromatic polyene copolymer (ethylene-styrene-divinylbenzene copolymer), which is actually included at 0.01 mol% or more and 0.2 mol% or less and cannot be detected by ¹H-NMR measurement, each of the abovementioned contents is determined. Further, the ethylene-aromatic vinyl compound copolymer (ethylene-styrene copolymer) and the aromatic vinyl compound polymer (polystyrene) are both included in the acetone insoluble component which accounts for the majority of the cross copolymer and these cannot be separated by a further separation operation. Hence, it is possible to prove that, in the present cross copolymer, the ethylene-aromatic vinyl compound copolymer chain and the aromatic vinyl compound polymer chain have a bond (as an example, an ethylene-styrene copolymer chain and a polystyrene chain have a bond). Despite the ethylene-aromatic vinyl compound copolymer chain and the aromatic vinyl compound polymer chain having a bond, the present cross copolymer substantially does not comprise a gel content and can exhibit practical moldability as a thermoplastic resin, that is, can exhibit a specific MFR value.

For the reasons described above, from a perspective of detectability, the cross copolymer can be defined as a copolymer that satisfies all of conditions (4) to (7) below:
(4) peaks ascribed to the ethylene-aromatic vinyl compound copolymer and the aromatic vinyl compound polymer are observed by ¹H-NMR measurement, the aromatic vinyl compound content in the ethylene-aromatic vinyl compound is 10-40 mol%, and more preferably 10-30 mol%, and the content of the ethylene-aromatic vinyl compound copolymer component included is in the range of 40-90 mass%, and more preferably 60-90 mass%;
(5) the included ethylene-aromatic vinyl compound copolymer and aromatic vinyl compound polymer have a bond;
(6) MFR (200°C, load 49 N) is in the range of 0.05-50 g/10 min., and more preferably in the range of 0.1-20 g/10 min.; and
(7) included gel content is 0.2 mass% or less, and more preferably 0.1 mass% or less.

### Component (C) oil

Examples of the component (C) oil include: mineral oil-based oils such as paraffinic, naphthenic, and aromatic process oils, and liquid paraffin; various kinds of ester-based plasticizers such as phthalates, trimellitates, pyromellitates, adipates, or citrates; silicone oil; castor oil; linseed oil; olefinic wax; and mineral wax. These may be used alone or a plurality may be used. Among these, paraffinic and/or naphthenic process oils are preferred. Examples of process oils include the Diana Process Oil Series (manufactured by Idemitsu Kosan Co., Ltd.) and JOMO Process P (manufactured by Japan Energy Corporation).

By containing the component (C) oil, it is possible to soften the thermoplastic resin composition and adjust the elasticity and hardness thereof. Among the foregoing, one kind may be used or two or more kinds may be used in combination. From a perspective of workability, it is preferable that the component (C) oil is absorbed in advance by the component (A) elastomer.

The amount of the component (C) oil used with respect to 100 parts by mass of the component (A) elastomer is 1 part by mass or more, and preferably 100 parts by mass or more. The amount of the component (C) oil used with respect to 100 parts by mass of the component (A) elastomer is 1500 parts by mass or less, and preferably 1200 parts by mass or less. The amount of oil used can be adjusted within the abovementioned ranges according to the objective of the surface skin material, etc. When less than 1 part by mass, the softness may be insufficient, and when exceeding 1500 parts by mass, the oil may leak (bleed out).

The following components may be used, as necessary, in the resin composition of the present embodiment.

### Filler

Examples of a filler include inorganic fillers and organic fillers. Examples of an inorganic filler include calcium carbonate, talc, clay, calcium silicate, magnesium carbonate, magnesium hydroxide, mica, barium sulfate, titanium oxide, aluminum hydroxide, silica, and carbon black. It is also possible to use a conductive filler such as fibrous or coil-shaped ceramic fibers, glass fibers, publicly-known graphites, carbon black, carbon fibers, carbon nanofibers, carbon nanotubes, coil-shaped carbon fibers, etc.

Examples of an organic filler include cross-linked rubbers such as nitrile rubber, butadiene rubber, etc. and fibrous and coil-shaped resin fibers. Examples of fibrous resin fibers include polyethylene fibers, polypropylene fibers, polyvinyl alcohol fibers (vinylon fibers), nylon fibers and cellulose fibers. If a resin fiber is used, it is necessary to set the molding temperature lower than the glass transition temperature, the crystalline melting point, and the decomposition temperature of the resin fiber. A filler can be used to improve the texture and to adjust the stretch and stress of the resin composition.

The amount of the filler used with respect to 100 parts by mass of the component (A) elastomer is preferably 100 parts by mass or more. The amount of the filler used with respect to 100 parts by mass of the component (A) elastomer is preferably 300 parts by mass or less, and more preferably 100 parts by mass or less.

It is possible to blend additives such as polypropylene-based resins, polyethylene-based resins, plasticizers, stabilizers, ultraviolet light absorbers, anti-static agents, conductive materials, weathering agents, anti-aging agents, fillers, coloring agents, lubricants, anti-fog agents, foaming agents, anti-blocking agents, nucleating agents, and cross-linking agents in a range that does not inhibit the objective of the present invention.

The resin composition according to the present invention is soft (tensile elasticity, 50% modulus, type E hardness, and type A hardness within a specific range) and has practical mechanical strength (thread tearing strength and thread tearing elongation within a specific range), and furthermore, has good tactile feel, texture, grip properties, and feeling of moisture, and is therefore suitable as a thermoplastic resin composition for a surface skin material for home appliances, construction material, furniture, robots, and the like, as well as for a grip material such as that used for automobile interior material and sports equipment. Regarding physical properties of the resin composition, when used as a surface skin material, for example, a tensile elasticity of 0.01 MPa to 10 MPa (type E hardness of 3 or more, type A hardness of 80 or less) is preferable. Among the foregoing, as a surface skin material which contacts a human body, such as for an instrument, robot, etc., and in particular, when used as an outer most surface skin material, a tensile elasticity of 0.01-1 MPa (type E hardness of 3 or more, type A hardness of 50 or less) is preferred. Similarly, as a material for skin or a blood vessel of a medical simulator, a tensile elasticity of 0.01-1 MPa (type E hardness of 3 or more, type A hardness of 50 or less) is preferred. In particular, as an automobile interior material, a type A hardness of 50-80 is preferred and a tensile elasticity of 1 MPa-10 MPa is preferred. For example, when the resin composition is used as a surface skin material, a 50% modulus (stress at a point of 50% stretching in a tensile test) is preferably 0.005-2 MPa, and more preferably 0.005-1 MPa. As a surface skin material, it is preferable to have high shape recovery after stress has been released, and having low residual strain is preferable. For example, the residual strain after a spring back test of the resin composition is preferably 15% or less using a measurement method of the present examples. The thread tearing strength and thread tearing elongation of the resin composition are important in a sense of suitability for sewing processes employed with leather and synthetic leather, and hair transplantation processes. Thus, from a perspective of anti-thread tearing properties, it is preferable that the thread tearing strength and thread tearing elongation are high. For example, using a measurement method of the present examples, a resin composition having a thread tearing strength of 2.5 N or more, and preferably 3.0 N or more, and a thread tearing elongation of 30 mm or more, is suitable.

Furthermore, in addition to the abovementioned softness and mechanical properties, the resin composition has a characteristic of having good tactile feel and texture. Here, tactile feel and texture mean a grip feeling and feeling of moisture when held or touched, and this texture can be expressed quantitatively preferably using a maximum static friction force or a coefficient of static friction. For a sheet having a thickness of 1 mm, the maximum static friction force at a load of 10 g is preferably 100 gf or more (gf means weight in g; hereinafter also referred to simply as g), and more preferably 120 gf or more and 300 gf or less. That is, the coefficient of static friction is preferably 10 or more, and more preferably 12 or more and 30 or less. Here, the coefficient of static friction is represented by maximum static friction force/load. By satisfying this condition, it is possible to have a good grip feeling and a good feeling of moisture. The maximum static friction force and the coefficient of static friction can be determined by a method described in the examples later. Due to the abovementioned mechanical properties and tactile feel, the resin composition according to the present embodiment is preferably used for surface skin and blood vessels in a medical simulator.

The resin composition can be produced using an appropriate publicly-known blending method or kneading method. For example, melt-mixing may be performed using a single screw extruder, a twin screw extruder, a Banbury mixer, a Plastomill, a Co-Kneader, a heating roll, etc. Before melt-mixing is performed, the raw materials may be mixed uniformly by a Henschel mixer, ribbon blender, super mixer, tumbler, etc. The melt-mixing temperature is not limited in particular, but is preferably 100-300°C, and more preferably 150-250°C.

The resin composition of the present invention can be molded using a publicly-known molding method. Various molding methods such as calendar molding, extrusion molding, cast molding, injection molding, vacuum molding, and blow molding may be used in accordance with the target material, for example, a surface skin material.

Embodiments of the present invention were described above, but these are examples of the present invention, and various configurations other than those described above may be employed.

### EXAMPLES

Below, examples are shown in order to understand the present invention, but the present invention is not limited to these examples. Unless otherwise specified, tests were carried out at a temperature of 23°C and a humidity of 50%.

### (1) Materials

**Component (A-1)**
   - Hydrogenated block copolymer: SEEPS (SEPTON4055, manufactured by Kuraray Co., Ltd.), MFR (temperature 230°C, load 2.16 kg) 0 g/10 min. (0 g/10 min. means there is no flow), styrene content 30 mass%, hydrogenation ratio 90 mol% or more.
   - Hydrogenated block copolymer: SEEPS (SEPTON4033, manufactured by Kuraray Co., Ltd.), MFR (temperature 230°C, load 2.16 kg) less than 0.1 g/10 min., styrene content 30 mass%, hydrogenation ratio 90 mol% or more.
   - Hydrogenated block copolymer: one or more from the group consisting of SEPS and SEEPS (SEPTON-J3341, manufactured by Kuraray Co., Ltd.), MFR (temperature 230°C, load 2.16 kg) 0 g/10 min. (0 g/10 min. means there is no flow), styrene content 40 mass%, hydrogenation ratio 90 mol% or more.
**Component (A-2)**
   Ethylene-α-olefin copolymer: copolymer of ethylene and 1-octene (ENGAGE 8100, manufactured by The Dow Chemical Company), density 0.870 g/cm³, MFR (temperature 190°C, load 2.16 kg) 1.0 g/10 min.
**Component (B-1)** cross copolymer (manufactured by Denka Co., Ltd.): main chain styrene content 17 mol%, divinylbenzene content 0.05 mol%, main chain molecular weight Mw 101,000, Mw/Mn = 2.2, ratio of the main chain ethylene-styrene-divinylbenzene copolymer included in the cross copolymer is 82 mass%, type A hardness 70, the present cross copolymer was obtained by a method disclosed in WO 2007/139116 A, and the peak intensity (surface area) of the vinyl group hydrogen (proton) of the divinylbenzene unit of the present cross copolymer was less than 20% compared to the same peak intensity (surface area) of the divinylbenzene unit of the ethylene-styrene-divinylbenzene copolymer obtained in the coordination polymerization step. In fact, the peak of the hydrogen (proton) of the vinyl group of the divinylbenzene unit was substantially eliminated in the cross copolymer after anion polymerization.
   MFR (200°C, load 49 N): 2.2 g/10 min., gel content measured by ASTM-D2765-84 was 0.05 mass% or lower, which is the lower limit of detection.
**Component (B-2)** cross copolymer 2 (manufactured by Denka Co., Ltd.): main chain styrene content 28 mol%, divinylbenzene content 0.06 mol%, main chain molecular weight Mw 121,000, Mw/Mn = 2.1, ratio of the main chain ethylene-styrene-divinylbenzene copolymer included in the cross copolymer is 70 mass%, type A hardness 75, the present cross copolymer was obtained by a method disclosed in WO 2007/139116 A, and the peak intensity (surface area) of the vinyl group hydrogen (proton) of the divinylbenzene unit of the present cross copolymer was less than 20% compared to the same peak intensity (surface area) of the divinylbenzene unit of the ethylene-styrene-divinylbenzene copolymer obtained in the coordination polymerization step. In fact, the peak of the hydrogen (proton) of the vinyl group of the divinylbenzene unit was substantially eliminated in the cross copolymer after anion polymerization.
   MFR (200°C, load 49 N): 5.0 g/10 min., gel content measured by ASTM-D2765-84 was 0.05 mass% or less, which is the lower limit of detection.
**Component (C)** paraffin oil (PW-90, manufactured by Idemitsu Kosan Co., Ltd.)

### (2) Kneading method

The component (A-1) hydrogenated block copolymer is supplied from the maker as an amorphous powder. Several days before kneading, a prescribed amount of oil was dripped onto the hydrogenated block copolymer and allowed to sufficiently infiltrate the same. A Brabender Plasti-Corder (PL2000, manufactured by Brabender GmbH) was used, the raw materials were introduced, and a sample was produced by kneading for six minutes at 180°C and a rotation speed of 50 rpm.

### (3) Test piece production method

### Sample sheet production

Specimens for a physical property evaluation used sheets of various thickness (1.0 mm, 5.0 mm) formed by a heating press method (180°C, time 5 min., pressure 50 kg/cm²).

### (4) Hardness

### Type A hardness

The type A durometer hardness was determined under a condition of 23 ±1°C in compliance with the plastic durometer hardness test method of JIS K 7215. It should be noted that this hardness is a momentary value.

### Type E hardness

5.0 mm sheets were overlapped, and the type E durometer hardness was determined under a condition of 23 ±1°C in compliance with the plastic durometer hardness test method of JIS K 7215. It should be noted that this hardness is a momentary value.

### (5) Tensile test (tensile elasticity, 50% modulus)

In compliance with JIS K 6251, a 1.0 mm thick sheet was cut into a No. 2 No. 1/2 type test piece shape and using a Shimazdu AGS-100D tensile tester, was measured at a tensile speed of 100 mm/min under conditions of 23 ±1°C. The tensile elasticity is initial tensile elasticity.

### (6) Thread tearing test (thread tearing strength, thread tearing elongation)

A Mani surgical eyed needle (general surgical, straight, spring eye, No.4 tapered needle) and a surgical thread (Blade Silk No. 3) were passed through a sheet having a length of 35 mm, a width of 25 mm, and a thickness of 1.0 mm, at a position 5 mm in the longitudinal direction and 12.5 mm in the lateral direction, the thread was then pulled at a speed of 100 mm/min, and strength and elongation until the tensile material tore were measured.

### (7) Spring back test (residual strain after spring back test)

A sheet having a length of 75 mm, a width of 25 mm, and a thickness of 1.0 mm was stretched 50% at a tensile speed of 100 mm/min with a distance between chucks of 25 mm, and maintained for 30 seconds, and afterwards value of the elongation when the sheet was caused to fall at a speed of 100 mm/min and the load was returned to zero was evaluated as the residual strain.

### (8) Texture evaluation

A sheet having a thickness of 1.0 mm was used in the texture evaluation. Using a Tribomaster Type: TL201Ts manufactured by Trinity Lab Co., Ltd., fitted with a finger model sensory contact (made of a urethane resin, having equidistantly spaced grooves etched therein to simulate finger prints), measurement was performed at a load of 10 g, a speed of 10 mm/sec., a data reading speed of 1 millisec., and a measurement length of 30 mm, the relationship of friction force with respect to time was measured, and the maximum static friction force and coefficient of static friction were determined. Measurement was performed five times changing the measurement location each time and an average value thereof was determined.

### Examples 1-5 and Comparative Examples 1-3

As the component (A) elastomer, 100 parts by mass of a hydrogenated block copolymer SEEPS (SEPTON4055, SEPTON4033, SEPTON-J3341, all manufactured by Kuraray Co., Ltd) shown in Table 1, as the component (B) cross copolymer, the (B-1) cross copolymer in the amount shown in Table 1, and the component (C) oil in the amount shown in Table 1 were blended, kneading was performed to obtain a thermoplastic resin composition, and an evaluation of the physical properties thereof was performed. Physical property measurement results are shown in Table 2.

### Comparative Examples 4-6

These were carried out in the same manner as Example 1 with the exception that a polyurethane resin shown in Table 1 was used. The following urethane resins, which are used in conventional resin compositions having a good texture, were used as urethane resins. Physical property measurement values are shown in Table 2.
- A commercially available soft polyurethane resin (powdered)
- A commercially available three liquid-type post-curing soft urethane resin (HEI-CAST 3400N manufactured by Heisen Yoko Co., Ltd.). By changing the blending ratio of the post-curing soft urethane resin, soft polyurethane resins having a type A hardness of, respectively, 9 and 24 were obtained. Sheets were obtained from the soft polyurethane resins.

### Example 6

With the exception of using the component (A-2) ethylene-α-olefin copolymer shown in Table 3 as the component (A) elastomer, a resin composition was obtained in the same manner as in Examples 1-5. An evaluation of each property was conducted in the same manner as in Examples 1-5. The results are shown in Table 4.

### Example 7

With the exception of using the component (B-2) cross copolymer 2 shown in Table 3 as the component (B) cross copolymer, a resin composition was obtained in the same manner as in Examples 1-5. An evaluation of each property was conducted in the same manner as in Examples 1-5. The results are shown in Table 4.

**[Table 1]**

| | Hydrogenated block copolymer SEPTON4055 | Hydrogenated block copolymer SEPTON4033 | Hydrogenated block copolymer SEPTON-J3341 | Cross copolymer | Paraffin oil (PW-90) | Polyurethane (powdered) | Polyurethane (Type A hardness 9) | Polyurethane (Type A hardness 24) |
|---|---|---|---|---|---|---|---|---|
| Example 1 | 100 | | | 20 | 100 | | | |
| Example 2 | 100 | | | 40 | 300 | | | |
| Example 3 | 100 | | | 80 | 300 | | | |
| Example 4 | | 100 | | 80 | 300 | | | |
| Example 5 | | | 100 | 20 | 300 | | | |
| Comparative Example 1 | 100 | | | - | 300 | | | |
| Comparative Example 2 | 100 | | | - | 100 | | | |
| Comparative Example 3 | | | 100 | | 300 | | | |
| Comparative Example 4 | | | | | | 100 | | |
| Comparative Example 5 | | | | | | | 100 | |
| Comparative Example 6 | | | | | | | | 100 |

| | | | | | | | | |
|---|---|---|---|---|---|---|---|---|
| Unit is parts by mass. Polyurethane is an abbreviation for soft polyurethane resin. | | | | | | | | |

**[Table 2]**

| Example/Comparative Example | Softness | | | | Mechanical Strength | | Residual strain after spring back test | Texture evaluation | |
|---|---|---|---|---|---|---|---|---|---|
| | Type A hardness | Type E hardness | Tensile elasticity | 50% modulus | Thread tearing strength | Thread tearing elongation | | Maximum static friction force | Coefficient of static friction |
| | | | (MPa) | (MPa) | (N) | (mm) | (%) | (gf) | |
| Example 1 | 30 | 55 | 0.95 | 0.27 | 11.0 | 53 | 3 | 141.0 | 14.1 |
| Example 2 | 9 | 23 | 0.18 | 0.06 | 7.1 | 108 | 0 | 201.0 | 20.1 |
| Example 3 | 13 | 31 | 0.40 | 0.11 | 5.4 | 40 | 12 | 136.0 | 13.6 |
| Example 4 | 16 | 35 | 0.40 | 0.12 | 3.6 | 35 | 10 | 138.0 | 13.8 |
| Example 5 | 5 | 11 | 0.07 | 0.03 | 3.5 | 67 | 0 | 165.0 | 16.5 |
| Comparative Example 1 | 5 | 12 | 0.09 | 0.02 | 3.5 | 121 | 0 | 92.3 | 9.2 |
| Comparative Example 2 | 23 | 46 | 0.70 | 0.23 | 8.7 | 47 | 0 | 47.3 | 4.7 |
| Comparative Example 3 | 5 | 9 | 0.06 | 0.03 | 0.9 | 23 | 0 | 110.4 | 11.0 |
| Comparative Example 4 (Polyurethane (powdered)) | 9 | 24 | 0.20 | 0.07 | 2.0 | 19 | 16 | 20.8 | 2.1 |
| Comparative Example 5 (Polyurethane (Type A hardness 9)) | 9 | 23 | 0.27 | 0.09 | 1.8 | 19 | 8 | 186.7 | 18.7 |
| Comparative Example 6 (Polyurethane (Type A hardness 24)) | 24 | 49 | 0.79 | 0.22 | 1.4 | 10 | 4 | 124.2 | 12.4 |

**[Table 3]**

| | Hydrogenated block copolymer SEPTON4055 | Hydrogenated block copolymer SEPTON4033 | Hydrogenated block copolymer SEPTON-J3341 | Ethylene-α-olefin copolymer Engage 8100 | Cross copolymer | Cross copolymer 2 | Paraffin oil (PW-90) | Polyurethane (powdered) | Polyurethane (Type A hardness 9) | Polyurethane (Type A hardness 24) |
|---|---|---|---|---|---|---|---|---|---|---|
| Example 6 | | | | 100 | 40 | | 50 | | | |
| Example 7 | 100 | | | | | 40 | 300 | | | |

| | | | | | | | | | | |
|---|---|---|---|---|---|---|---|---|---|---|
| Unit is parts by mass. Polyurethane is an abbreviation for soft polyurethane resin. | | | | | | | | | | |

**[Table 4]**

| Example/Comparative Example | Softness | | | | Mechanical Strength | | Residual strain after spring back test | Texture evaluation | |
|---|---|---|---|---|---|---|---|---|---|
| | Type A hardness | Type E hardness | Tensile elasticity | 50% modulus | Thread tearing strength | Thread tearing elongation | | Maximum static friction force | Coefficient of static friction |
| | | | (MPa) | (MPa) | (N) | (mm) | (%) | (gf) | |
| Example 6 | 55 | 77 | 3.10 | 1.00 | 40.0 | 120 | 0 | 125.0 | 12.5 |
| Example 7 | 7 | 20 | 0.15 | 0.07 | 9.1 | 120 | 0 | 230.0 | 23.0 |

From the results shown in Tables 2 and 4, all of the resin compositions obtained in the examples have softness (tensile elasticity, 50% modulus, type A hardness, and type E hardness) and high mechanical strength (thread tearing strength, thread tearing elongation). These resin compositions have a large value for texture evaluation (maximum static friction force, coefficient of static friction) and good texture (grip properties, feeling of moisture). The resin compositions of Comparative Examples 1, 2, and 4 have a small value for texture evaluation (maximum static friction force, coefficient of static friction) and have a problem in terms of texture. The polyurethane resins of Comparative Examples 3-6 have a problem in that they have low mechanical strength (thread tearing strength, thread tearing elongation).

Accordingly, the resin compositions of the present examples have excellent softness and mechanical properties, good texture and tactile feel, and are suitable, for example, as a surface skin material and grip material. The resin compositions of the present examples can be used as a resin composition having a good texture. The resin compositions of the present examples have little residual strain and are suitable, for example, as a surface skin material.

### Evaluation of cutting feel

Using sheets with a length of 150 mm, a width of 90 mm, and a thickness of 2.0 mm as a skin, said sheets using the resin compositions of Examples 1, 2, and 4, and Comparative Example 1, a skin sheet was fixed on a sponge-type base and a cut was made therein by a physician using a surgical scalpel. In the case of Examples 1, 2, and 4, it was possible to cut with a tactile feel comparatively close to that of a human body, but in the case of Comparative Example 1, the elasticity has a strong rubber-like feel (springy feel) and was different to that of a human body.

Using the resin compositions of Examples 1, 2, and 4 and tube-forming equipment, tubes having an outer diameter of 8 mm, and a thickness of 2 mm were made. To prevent air from entering, tubes were filled with water that had been colored red to simulate blood, and once a tube had been filled with liquid using a metering pump, both ends of the tube were sealed using clips. Then, a physician carried out a puncturing test using a syringe fitted with a 17G needle having an outer diameter of 1.4 mm. A tactile feel close to an actual blood vessel was obtained, and further, when the needle was removed, a hole formed by the needle closed naturally and there was no leakage of the simulated blood contained in the tube.

## Claims

1. A resin composition comprising 100 parts by mass of a component (A) elastomer, 5-90 part by mass of a component (B) cross copolymer, and 1-1500 parts by mass of a component (C) oil, said resin composition having, for a sheet of 1.0 mm thickness and at a load of 10 g, a maximum static friction force of 100 gf or more, and a coefficient of static friction of 10 or more and 30 or less.

2. The resin composition according to claim 1, wherein the maximum static friction force is 120 gf or more and 300 gf or less and the coefficient of static friction is 12 or more and 30 or less.

3. The resin composition according to claim 1 or 2, wherein the component (A) elastomer contains one or more copolymer selected from a styrene-based block copolymer (A-1) and an ethylene-α-olefin copolymer (A-2).

4. The resin composition according to any one of claims 1 to 3, wherein the component (A) elastomer contains a styrene-based block copolymer (A-1).

5. The resin composition according to any one of claims 1 to 4 having a tensile elasticity in the range of 0.01-10 MPa.

6. The resin composition according to any one of claims 1 to 5 having a thread tearing strength of 2.5 N or more.

7. The resin composition according to any one of claims 1 to 6 having a type A hardness of 80 or less

8. The resin composition according to any one of claims 1 to 7, wherein the component (B) cross copolymer is obtained by a production method comprising a coordination polymerization step followed by an anion polymerization step, wherein, as the coordination polymerization step, an ethylene-aromatic vinyl compound-aromatic polyene copolymer is synthesized by carrying out copolymerization of an ethylene monomer, an aromatic vinyl compound monomer, and an aromatic polyene using a single site coordination polymerization catalyst, and next, as the anion polymerization step, polymerization using an anion polymerization initiator in the coexistence of the ethylene-aromatic vinyl compound-aromatic polyene copolymer and an aromatic vinyl compound monomer is performed to obtain the component (B) cross copolymer, and furthermore, the component (B) cross copolymer satisfies all of conditions (1)-(3) below:
(1) the content of an aromatic vinyl compound unit in the ethylene-aromatic vinyl compound-aromatic polyene copolymer obtained in the coordination polymerization step is 10 mol% or more and 40 mol% or less, an aromatic polyene unit content is 0.01 mol% or more and 0.2 mol% or less, and the remainder is an ethylene unit;
(2) the weight-average molecular weight of the ethylene-aromatic vinyl compound-aromatic polyene copolymer obtained in the coordination polymerization step is 50,000 or more and 300,000 or less, and the molecular weight distribution (Mw/Mn) is 1.8 or more and 6 or less; and
(3) the content of the ethylene-aromatic vinyl compound-aromatic polyene copolymer included in the cross copolymer is 40 mass% or more and 90 mass% or less.

9. The resin composition according to any one of claims 1 to 7, wherein the component (B) cross copolymer is a copolymer that has an ethylene-aromatic vinyl compound-aromatic polyene copolymer chain and an aromatic vinyl compound polymer chain, and has a structure wherein the ethylene-aromatic vinyl compound-aromatic polyene copolymer chain and the aromatic vinyl compound polymer chain are bonded via an aromatic polyene unit.

10. The resin composition according to any one of claims 1 to 7, wherein the component (B) cross copolymer is a graft-through copolymer comprising an ethylene-aromatic vinyl compound-aromatic polyene copolymer chain and an aromatic vinyl compound polymer chain.

11. The resin composition according to any one of claims 1 to 7, wherein the component (B) cross copolymer satisfies all of conditions (4)-(7) below:
(4) peaks ascribed to an ethylene-aromatic vinyl compound copolymer and an aromatic vinyl compound polymer are observed by ¹H-NMR measurement, and the aromatic vinyl compound content in the ethylene-aromatic vinyl compound copolymer is 10-40 mol%, and the content of the ethylene-aromatic vinyl compound copolymer component included is in the range of 40-90 mass%;
(5) the included ethylene-aromatic vinyl compound copolymer and aromatic vinyl compound polymer have a bond;
(6) the MFR (200°C, load 49 N) is in the range of 0.05-50 g/10 min.; and
(7) the included gel content is 0.2 mass% or less.

12. The resin composition according to any one of claims 1 to 11, wherein the resin composition is to be used in a surface skin material.

13. The resin composition according to any one of claims 1 to 11, wherein the resin composition is to be used in skin or a blood vessel for a medical simulator.

14. A skin surface material made using the resin composition according to any one of claims 1 to 12.

15. Skin or a blood vessel for a medical simulator made using the resin composition according to any one of claims 1 to 11 and 13.
